# EUROPÄISCHE PATENTSCHRIFT

(11) **EP 0 758 861 B1**
(45) Veröffentlichungstag und Bekanntmachung des Hinweises auf die Patenterteilung: **23.09.1998**
(21) Anmeldenummer: 95917228.9
(22) Anmeldetag: 05.05.1995
(51) Int. Cl.: A47J 37/06, A47J 37/07

(54) **VORRICHTUNG ZUR ZUBEREITUNG VON SPEISEN**
DEVICE FOR COOKING FOOD
DISPOSITIF POUR LA CUISSON D'ALIMENTS

(30) Priorität: 05.05.1994 AT 942/94
(43) Veröffentlichungstag der Anmeldung: 26.02.1997
(73) Patentinhaber: Gschwind, Ernst, 8511 St. Stefan (AT)
(72) Erfinder: Gschwind, Ernst, 8511 St. Stefan (AT)
(74) Vertreter: Gibler, Ferdinand, Dipl.Ing. Dr. techn.
(86) Internationale Anmeldenummer: AT9500090
(87) Internationale Veröffentlichungsnummer: WO9530365

(56) Entgegenhaltungen:
- EP-A- 0 345 784
- DE-A- 2 154 486
- DE-A- 2 529 409
- DE-C- 156 208
- GB-A- 1 058 216
- GB-A- 2 156 201
- US-A- 4 574 770
- US-A- 4 606 261
- US-A- 5 189 945

## Beschreibung

Die Erfindung bezieht sich auf eine Vorrichtung zur Zubereitung von Speisen, wie z.B. eine Grill- bzw. Backeinrichtung, nach dem Oberbegriff des einzigen Anspruches.

Bei bekannten Vorrichtungen dieser Art, wie z.B. Grilleinrichtungen, strömt die erwärmte Luft direkt zur Unterseite des Rostes und zwischen dessen Stäben hindurch zum Grillgut. Dabei kommt es aber zu einem Abtropfen von Grillgutsäften, insbesondere Fett. Dies ist besonders dann von Nachteil, wenn die Einrichtung zum Erwärmen der Luft durch ein Glutnest oder durch Glühstäbe gebildet ist, da in diesem Fall die Grillgutsäfte insbesondere aber das abtropfende Fett verbrennt, wobei die Verbrennungsrückstände von der erwärmten Luft wieder mitgerissen werden und daher das Grillgut kontaminieren.

Aus der US-A-4 574 770 ist eine Kochvorrichtung mit einer Einrichtung zur Erwärmung der Luft und einem Rost bekanntgeworden, wobei über die Einrichtung zur Erwärmung der Luft in zwei verschiedenen Ebenen von einem Kühlmittel durchströmte Hohlprofile angeordnet sind, welche an ihren Oberseiten rinnenförmig ausgebildet sind und Ablaufrinnen für die entstehenden Gargutsäfte bilden und welche in den beiden höhenversetzten Ebenen in horizontaler Richtung gegeneinander versetzt sind. Sowohl die Hohlprofile als auch deren Rinnengrund sind dabei gegen die Horizontale geneigt.

Durch die DE-C-156 208 wurde eine Grilleinrichtung vorgeschlagen, bei dem zwei Reihen von Roststäben derart übereinander angeordnet sind, daß das abtropfende Fett von den unteren Roststäben aufgefangen und einem Sammelbehälter zugeführt wird.

Ziel der Erfindung ist es, diese Nachteile zu vermeiden und eine Vorrichtung der eingangs erwähnten Art vorzuschlagen, bei der einerseits ein im wesentlichen unbehinderter Garvorgang gewährleistet ist, und bei der andererseits ein Verbrennen, insbesondere im Bereich des Glutnestes bzw. Heizstelle, von abtropfenden Gargutsäften und Fett vermieden ist.

Erfindungsgemäß wird dies bei einer Vorrichtung der eingangs erwähnten Art durch die kennzeichnenden Merkmale des einzigen Anspruches erreicht.

Durch diese Maßnahmen wird sichergestellt, daß die abtropfenden Gargutsäfte aufgefangen und abgeleitet werden, wobei durch die Ausbildung der die Gargutsäfte auffangenden Teile sichergestellt wird, daß einerseits die Gargutsäfte überhaupt nicht in das Glutnest gelangen können und andererseits eine Überhitzung der aufgefangenen Gargutsäfte verhindert wird.

Das Abrinnen wird dadurch verbessert, daß der Grund der in den Hohlprofilen ausgebildeten Rinnen bei horizontaler Anordnung der Hohlprofile gegen die Horizontale geneigt ausgebildet ist.

Die Erfindung wird nun anhand der Zeichnungen näher erläutert. Dabei zeigt:
Fig. 1 einen Schnitt durch eine nicht erfindungsgemäße Vorrichtung zur Zubereitung von Speisen,
Fig. 2 einen Schnitt entlang der Linie I-I der Fig. 1, und
Fig. 3 einen teilweisen Schnitt durch eine Ausführungsform der erfindungsgemäßen Vorrichtung.

Wenngleich die Erfindung nachstehend anhand einer Grilleinrichtung beschrieben ist, ist sie auf eine solche nicht beschränkt. Das Garen bzw. Zubereiten der Speisen kann nicht nur auf einem Grillrost, sondern auch auf einer Platte, einem Stein, o.dgl. erfolgen, die von der Feuerstelle der Vorrichtung erwärmt werden.

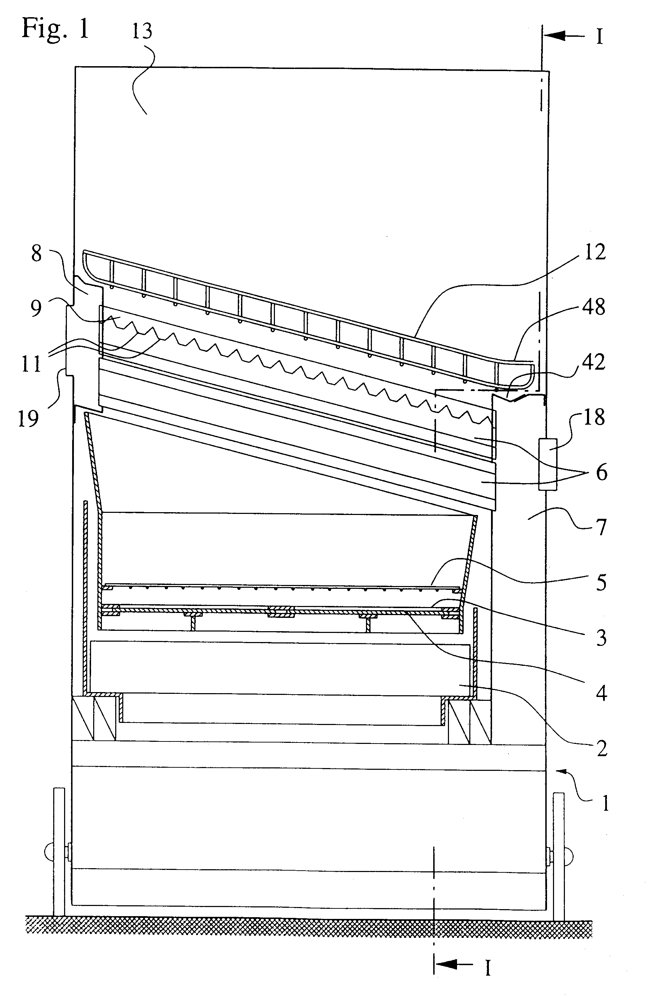

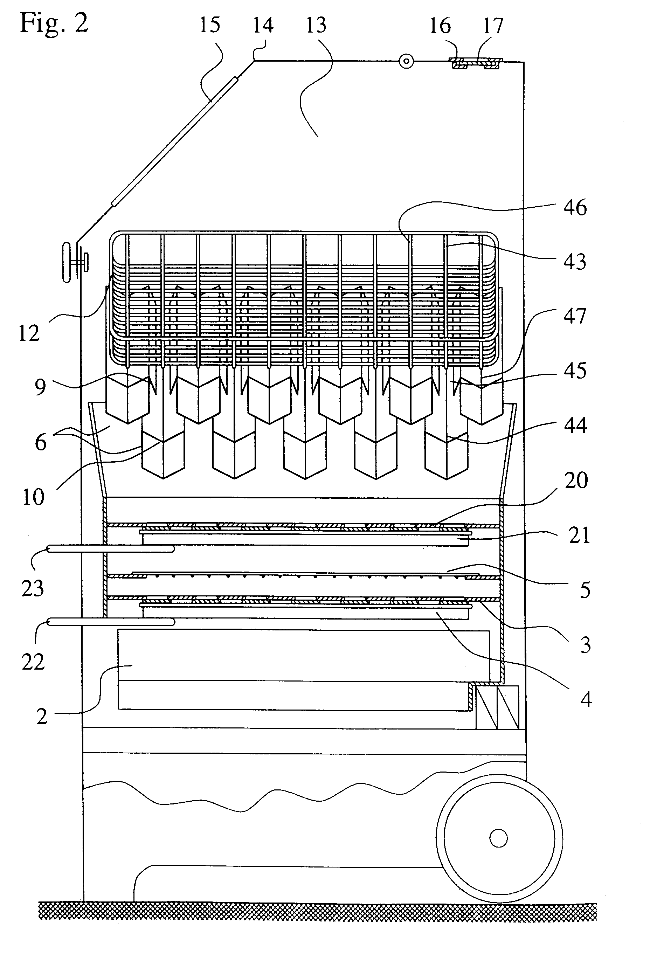

Bei einer Vorrichtung zur Zubereitung von Speisen nach den Fig. 1 und 2 ist in einem Gehäuse 1, und zwar in dessen unterem Bereich, eine Aschenlade 2 und über dieser eine Schlitzplatte 3 angeordnet, wobei die Schlitze der letzteren mit einem ebenfalls mit Schlitzen versehenen Schieber 4, durch Betätigen des Handgriffes 22 mehr oder weniger verschließbar sind.

Über der Schlitzplatte 3 ist ein Glutrost 5 angeordnet, der das zur Erwärmung der Luft dienende Glutnest und den entsprechenden Brennstoff aufnimmt.

Oberhalb des Glutrostes 5 ist eine weitere Schlitzplatte 20 angeordnet, deren Schlitze durch einen Schieber 21 mehr oder weniger verstellbar sind. Die Verstellung erfolgt von außen mittels des Handgriffes 23.

Hiedurch kann die Warmluftzufuhr in Richtung Gargut in einfacher Weise geregelt, insbesondere gedrosselt werden.

Oberhalb der Schlitzplatte 20 sind in zwei gegen die Horizontale schräg geneigten Ebenen Hohlprofile 6 angeordnet, deren beide offenen Enden in Luftsammelräumen 7 und 8 münden.

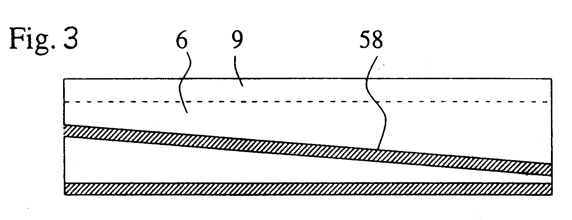

Abweichend von dieser Ausführungsform ist erfindungsgemäß der Grund 58 der in den Hohlprofilen 6 ausgebildeten Rinne bei horizontaler Anordnung der Hohlprofile 6 gegen die Horizontale geneigt ausgebildet, was im einzelnen Fig. 3 zeigt.

Dabei ist der Luftsammelraum 7 mit einer Luftansaugöffnung verbunden, wobei in dieser Verbindung vorteilhafterweise ein Ventilator 18 angeordnet ist, der die Luft durch die Hohlprofile 6 hindurchdrückt.

Der obere Luftsammelraum 8 ist mit einer Auslaßöffnung 19 verbunden.

Luftsammelraum bzw. -räume stellen zusammen mit den Hohlprofilkanälen ein von dem Heißluftkreislauf völlig abgesondertes selbständiges System dar, wodurch die besonders vorteilhafte Kühlung der Grillgutsäfte erreicht wird.

Die Erfindung ist auf die vorstehende beschriebene Ausführungsform, bei welcher das Kühlmedium Luft ist, gegebenenfalls zwangsbewegte Luft, nicht beschränkt. Es liegt durchaus im Rahmen der vorliegenden Erfindung, als Kühlmedium auch Wasser zu verwenden. Hierzu ist es bloß erforderlich, den Luftsammelraum mit Wasser zu beschicken und dieses über die über den Raum 7 hinaus verlängerten Hohlprofile abströmen zu lassen. Auch eine Ausführungsform ist denkbar, bei welcher die Hohlprofile an ihren Enden jeweils zu einer Abfluß- bzw. Zuflußleitung zusammengefaßt sind, sodaß es unter Zwischenschaltung einer Pumpe oder eines Kühlaggregates einen geschlossenen Kreislauf aufbaut.

Wie aus der Fig. 2 zu ersehen ist, sind die einen pfeilförmigen Querschnitt aufweisenden Hohlprofile 6 der oberen Reihe mit im Querschnitt schräg nach unten geneigten Seitenteilen 9 versehen, deren Längsränder, wie aus der Fig. 1 zu ersehen ist, profiliert sind und damit eine Vielzahl von ausgeprägten Abtropfspitzen 11 aufweisen. Die Neigung gegen die Horizontale kann 10 bis 90 Grad betragen. Anstelle der Auszackung kann eine beliebig andere Profilierung, wie z.B. nadelartig vorstehende Stäbe bzw. Fortsätze gewählt werden, die jedenfalls ein durchgehendes Abrinnen längs der Kante verhindert.

Die Hohlprofile 6 sind in den beiden Ebenen gegeneinander versetzt angeordnet und weisen an ihren Oberseiten eine durch einen nach innen gerichteten Knick gebildete Rinne 10 auf, die zur Aufnahme und Ableitung der Grillgutsäfte dient.

Wie weiters aus der Fig. 2 zu ersehen ist, sind die lichten Abstände zwischen den Hohlprofilen 6 der oberen Ebene kleiner als die Breite der Hohlprofile 6 in der unteren Ebene, sodaß die äußeren Kanten der Seitenteile 9 der oberen Hohlprofile 6 in vertikaler Richtung über den Rinnen 10 der in der unteren Ebene angeordneten Hohlprofile 6 liegen, sodaß die zwischen den Hohlprofilen 6 der oberen Ebene abtropfenden Grillgutsäfte sicher von den Rinnen 10 der unteren Hohlprofile aufgenommen werden.

Oberhalb der Hohlprofile 6 ist ein Rost 12 mit Querstäben 43, 46 zur Aufnahme des Grillgutes angeordnet und zwar so, daß die parallel zur Längsrichtung der Hohlprofile verlaufenden Stäbe 43 etwa über dem Rinnengrund 44 der in der tiefer liegenden Ebene angeordneten Hohlprofile 6, jedenfalls aber über dem zwischen den Seitenteilen 9 zweier aneinandergrenzender Hohlprofile vorliegenden Freiraum 45 und die anderen, parallel zur Längsrichtung der Hohlprofile verlaufenden Stäbe 46 etwa über dem Rinnengrund 47 der in der höher liegenden Ebene angeordneten Hohlprofile 6 zu liegen kommen. Hiedurch wird ein sauberes und gezieltes Abtropfen der Grillgutsäfte in Richtung Profile sichergestellt.

Der Rost 12 endet an seinem tiefer liegenden Ende in einem etwa waagrechten Bereich 48 unter dem eine Auffangrinne 42 angeordnet ist. Diese ist mit - nicht dargestellten - Durchtrittsöffnungen versehen, so daß längs der Roststäbe allfällige abrinnende Grillgutstäfte, gesammelt von der Rinne 42 über diese Öffnungen in den Sammelbehälter 41 für die Grillgutsäfte abtropfen kann, welcher Sammelbehälter 41 auch von den Hohlprofilrinnen beschickt wird.

Abgedeckt ist das Grillgut mit einer Haube 13, die einen aufklappbaren Deckel 14 aufweist, der mit einem Sichtfenster 15 versehen ist.

Weiters ist im Bereich der Haube 13 eine mit einer Schlitzplatte 16 und einem Schieber 17 versehene Öffnung vorgesehen, durch die die Dämpfe abziehen können.

Beim Grillen steigt die durch das auf dem Glutrost liegende Glutnest erwärmte Luft zwischen den Hohlprofilen 6 nach oben zum auf dem Rost 12 liegenden Grillgut, gart dieses und entweicht über die über die Schlitzplatte 16 und den Schieber 17 gesteuerte Öffnung.

Die dabei abtropfenden Grillgutsäfte werden von den Rinnen 10 der Hohlprofile 6 aufgenommen und abgeleitet, die durch ein in deren Innenraum strömendes Kühlmedium, wie z.B. Luft gekühlt werden.

Fig. 3 zeigt die erfindungsgemäße, waagrechte Anordnung der Hohlprofile 6, wobei das Abrinnen der Grillgutsäfte dadurch erreicht wird, daß der Grund 58 der in den Hohlprofilen 6 ausgebildeten Rinnen gegen die Horizontale geneigt ist.

## Patentansprüche

1. Vorrichtung zur Zubereitung von Speisen, wie z.B. eine Grill- bzw. Backeinrichtung, mit einer Einrichtung zur Erwärmung der Luft und gegebenenfalls einem Rost, wobei über der Einrichtung zur Erwärmung der Luft in zwei verschiedenen Ebenen von einem Kühlmittel durchströmbare Hohlprofile (6) angeordnet sind, von welchen zumindest jene einer Ebene an ihren Oberseiten rinnenförmig ausgebildet sind, und Ablaufrinnen für die Gargutsäfte der Speisen bilden, wobei die Hohlprofile (6) in den beiden höhenversetzten Ebenen in horizontaler Richtung gegeneinander versetzt sind, **dadurch gekennzeichnet**, daß bei horizontaler Anordnung der Hohlprofile (6) der Grund (58) der in den Hohlprofilen (6) ausgebildeten Rinnen gegen die Horizontale geneigt ausgebildet ist.

## Claims

1. An apparatus for the preparation of ailments such as a grilling or baking device, with a device for heating the air and optionally a grate, with hollow profiles (6) being arranged in two levels above the device for heating the air, which profiles can be flowed through by a coolant and of which at least those of one plane are arranged in a grooved manner on their upper sides and form run-off grooves for the drippings of the ailments, with the hollow profiles (6) being mutually offset in the horizontal direction in the two height-offset levels, characterized in that in the case of a horizontal arrangement of the hollow profiles (6) the base (58) of the grooves formed in the hollow profiles is arranged with an inclination towards the horizontal.

## Revendications

1. Dispositif pour la préparation d'aliments, par exemple dispositif pour griller ou rôtir, comportant un dispositif pour le chauffage de l'air et éventuellement une grille, dans lequel des profilés creux (6), pouvant être parcourus par un fluide de refroidissement, sont disposés au-dessus du dispositif pour le chauffage de l'air dans deux plans différents, ceux d'un plan au moins étant conçus en forme de gouttière sur leurs faces supérieures et formant des gouttières d'écoulement pour les jus de cuisson, les profilés creux (6) des deux plans décalés en hauteur étant décalés les uns par rapport aux autres dans le sens horizontal, caractérisé en ce que lorsque les profilés creux (6) sont disposés horizontalement, le fond (58) des gouttières formées dans les profilés creux (6) est incliné par rapport à l'horizontale.
